# EUROPÄISCHE PATENTSCHRIFT

(11) **EP 1 207 766 B1**
(45) Veröffentlichungstag und Bekanntmachung des Hinweises auf die Patenterteilung: **06.10.2004**
(21) Anmeldenummer: 00965875.8
(22) Anmeldetag: 16.08.2000
(51) Int. Cl.: A47B 47/02, A47B 57/48, A47B 57/52

(54) **KRAGARMREGAL**
CANTILEVER TYPE SHELF
RAYONNAGE A BRAS EN PORTE-A-FAUX

(30) Priorität: 02.09.1999 DE 29915443 U
(43) Veröffentlichungstag der Anmeldung: 29.05.2002
(73) Patentinhaber: Hölscher, Andreas, 50933 Köln (DE)
(72) Erfinder: Hölscher, Andreas, 50933 Köln (DE)
(74) Vertreter: Mey, Klaus-Peter, Dr.-Ing. Dipl.-Wirtsch.-Ing.
(86) Internationale Anmeldenummer: PCT/EP2000/007954
(87) Internationale Veröffentlichungsnummer: WO 2001/017394

(56) Entgegenhaltungen:
- GB-A- 2 044 080
- US-A- 3 612 291
- US-A- 4 396 125
- US-A- 5 161 701

## Beschreibung

Die Erfindung betrifft ein Kragarmregal für Langgutprodukte wie Bretter, Rohre, Profileisen und dgl., mit Ständern und sich von diesen aus erstreckenden Kragarmen.

Aus der europäischen Patentschrift 0 061 514 ist ein derartiges Kragarmregal bekannt, bei dem die Ständer als Doppel-T-Profilständer ausgebildet sind und wobei in den Flanschen der Ständer Ausstanzungen paarweise im Abstand voneinander und in gleicher Höhe übereinander angeordnet sind. Am Ende jedes Kragarmes befinden sich als Halteelemente zwei Haken zum lösbaren Einhängen in die Ausstanzungen der Ständer. Das Ein- bzw. Aushängen der Kragarme kann immer nur unter einem bestimmten Winkel erfolgen. Hierfür müssen daher unter bestimmten Bedingungen, d. h. bei vergleichsweise großer Länge und/oder geringer Abstandshöhe der Kragarme die darüber befindlichen Arme mit darauf befindlichen Lasten bei entsprechendem Arbeits- und Zeitaufwand vorher entfernt werden.

Aus der EP 0 519 316 B1 ist ein Kragarmregal bekannt, bei dem die Kragarme horizontal einbringbar sind und dessen Ausgestaltung darin besteht, dass jeder Haken einen teilweise nach unten verdickten Hals aufweist, dessen Unterseite eine Auflagenfläche in einem Teilbereich der Unterkante der Ausstanzung bildet. Diese Ausbildung erfordert ein außerordentlich hohes Maß an Präzision. Dabei soll der ansteigende Teil des Keiles in horizontaler Richtung eine Länge besitzen, die etwa der halben Dicke des Flansches entspricht und um eine Passungstoleranz zwischen 0,1 und 0,5 mm kleiner sein als der Abstand der Hakeninnenseite von der Flanschinnenseite, wobei die Auflagefläche des Halses eine horizontale Länge aufzuweisen hat, die etwa der halben Dicke des Flansches entspricht, und schließlich das Höhenmaß des Hakens um eine Passungstoleranz, vorzugsweise 0,1 bis 0,5 mm, kleiner als der Abstand zwischen Unterkante und Oberkante der Ausstanzungen des Flansches sein soll. Auch hier sind die Ständer als Doppel-T-Profilständer ausgebildet.

Aus der WO 98/11804 ist schließlich ein Kragarmregal bekannt geworden, bei dem ebenfalls die Ständer als Doppel-T-Profilständer ausgebildet sind und wobei die Haken horizontal durch die Ausstanzungen bereichsweise durchsteckbar sind und wobei in dem durchsteckbaren Bereich eines jeden Hakens eine zur horizontalen Aufnahme eines Sperrelementes ausgebildete Ausnehmung vorhanden ist.

Im Allgemeinen sind bei Schwerlastregalen die Ständer als Doppel-T-Profilständer nach DIN 1025 ausgebildet. Die aus Doppel-T-Profilen gebildeten Ständer (z. B. IPE-Profile) erfordern einen hohen Materialeinsatz und damit auch hohe Frachtkosten. Zumeist bestehen diese Walzprofile aus Stahlsorten der Gütegruppe St 37, d. h. einem verhältnismäßig preiswerten Massenstahl. Sollen höherwertige Materialien zum Einsatz kommen, scheitert dies häufig an den dann stark erhöhten Materialkosten und geringer Marktgängigkeit. Daneben ist eine optimale Anpassung der Tragfähigkeit eines Kragarmregals an die jeweiligen Erfordernisse nicht möglich, da die handelsüblichen IPE-Ständer nur in einem abgestuften Sortiment mit demzufolge gestuften Lastsprüngen lieferbar sind, wodurch der konkrete Anwendungsfall entweder überoder unterdimensioniert werden muss.

Um den Materialeinsatz bei gleichbleibender Stabilität für die Ständer zu reduzieren, werden in der US-A-3,612,291 die Ständer eines Kragarmregals aus zwei u-förmig profilierten Blechflanschen gefertigt. Die Blechflansche werden dabei fachwerkähnlich durch horizontale und diagonale Stege miteinander so verbunden, dass die Ständer nach oben hin spitz zulaufen. An den Verbindungsstellen bilden dann die beiden Blechflansche mit den sie verbindenden Stegen in etwa ein Doppel-T-Profil aus. Die Kragarme werden bei diesem bekannten Regal seitlich an einem der miteinander verbundenen Blechflansche angeschraubt.

Ausgehend von diesem Stand der Technik liegt der Erfindung die Aufgabe zugrunde, ein Kragarmregal der eingangs genannten Art wesentlich zu verbessein und mit einfachen Mitteln derart auszugestalten, dass bei einem Höchstmaß an Tragfähigkeit bzw. deren Optimierung an den jeweiligen Anwendungsfall sowohl eine problemlose Fertigung als auch eine möglichst einfache Montage erreicht wird, wodurch höchste Ansprüche an die Toleranzgenauigkeit der miteinander zusammenwirkenden Elemente an Ständer und Kragarmen erfüllt werden können.

Die Aufgabe wird erfindungsgemäß mit den Merkmalen des Anspruchs 1 gelöst, wobei die Ständer aus profilierten Blechflanschen bestehen, die über einen Steg in etwa ein Doppel-T-Profil bilden. Die Formgebung erfolgt dabei aus warm- oder kaltgewalztem Band/Blech-Coils mittels bekannter Kaltprofilierung. Hierdurch, nämlich durch eine Verstellbarkeit und Variabilität der Flansche bzw. Flanschprofilierungen kann eine Lastabstufung bisheriger IPE-Ständer entfallen, so dass eine optimale Anpassung der Tragfähigkeit bezüglich Materialauswahl vorgenommen werden kann, d. h. es können bessere, höherwertige Blechqualitäten, beispielsweise St 52 statt St 37 zu günstigen Preisen verwendet werden. Eine Überdimensionierung der Kragarmregale wie bei bisherigen Doppel-T-Walzprofilen ist nicht notwendig.

Der Einsatz von St 52 bringt beispielsweise schon ca. 30 % Materialeinsparung bei gleicher Belastung des Regals. Durch die stufenlose Variation bzw. Anpassung an die erforderliche Tragfähigkeit können weitere 30-40 % Material eingespart werden. Ferner können bisher kostenaufwendige Arbeitsgänge wie Sandstrahlen und Schweißen bei verringerten Lohnkosten weitgehend entfallen.

Die erfindungsgemäßen Blechprofile können in nahezu beliebiger Profilierung aus warm- oder kaltgewalzten Band/Blech-Coils in allen Stahlsorten in normaler oder oberflächenveredelter Ausführung kostengünstig auf dafür geeigneten Maschinen hergestellt werden.

Ferner sind die Blechtoleranzen geringer als die IPE-Toleranzen, wodurch auch eine Verwendung des erfindungsgemäßen Kragarmregals als Hochregallager mit automatischer Beschickung möglich ist. Durch die erfindungsgemäße Ausbildung wird sowohl eine passgenaue und zugleich trotz enger Toleranzen kostengünstige Fertigung als auch ein problemloses Ein- und Aushängen der Kragarme bei deren Montage erheblich begünstigt. Darüberhinaus ergeben sich statische Vorteile durch Optimierung der Flanschprofilierung und deren Stärke bis ca. 5 mm sowie durch die mögliche Anbringung von Verstärkungsmaterialien.

Nicht notwendigerweise müssen in den Flanschen der Ständer Ausstanzungen paarweise im Abstand voneinander und in gleicher Höhe übereinander angeordnet sein, allerdings soll dies auch nicht ausgeschlossen, sondern in Verbindung mit weiteren Maßnahmen durchaus sinnvoll sein.

In vorteilhafter Ausgestaltung der Erfindung ist vorgesehen, dass die Blechflansche eine Vertikalnut besitzen, an die sich der Steg anschließt. Auf diese Weise können für beide Ständerseiten die gleichen Profile kostengünstig hergestellt und verwendet werden. Gleichzeitig ermöglicht die Vertikalnut eine horizontale Montage und Demontage der Kragarme, wenn nach der Erfindung die Kragarme eine Fußplatte mit einer Nase aufweisen und die Nase in die Vertikalnut einbringbar und darin befestigbar ausgebildet ist, wodurch sich große statische Vorteile ergeben, da die Kräfte in den Steg eingeleitet werden.

Besonders zweckmäßig ist es dabei, dass die Vertikalnut seitlich Halteöffnungen aufweist, in denen der Kragarm auf einfache Weise höhenverstellbar und vorzugsweise selbstsichemd befestigbar ist.

Nach der Erfindung schließen sich an die Vertikalnut zu beiden Seiten nach außen gegenüber der Außenfront vertiefte Wangen an, wodurch bisherige Vorsprünge und damit Behinderungen beim Be- und Entladen der Regale vermieden werden.

Dadurch, dass an den Außenseiten der profilierten Blechflansche jeweils Ausbuchtungen zur Aufnahme von Verstärkungsmaterial vorgesehen sind, wobei das Verstärkungsmaterial (vorzugsweise Vollmaterial bzw. Stahl) vom Ständerfuß vorzugsweise bis zu einer Höhe von etwa 1,5 m eingeschweißt ist, kann der zugsweise bis zu einer Höhe von etwa 1,5 m eingeschweißt ist, kann der Materialeinsatz bei optimierter Tragfähigkeit weiter minimiert und damit Kosten eingespart werden.

In den vertieften Wangen können mit Vorteil Lochungen paarweise im Abstand voneinander und in gleicher Höhe übereinander angeordnet sein, die mit am Ende jedes Kragarmes sich als Halteelemente befindenden zwei Haken (nicht dargestellt, vgl. aber DE 38 32 537 A1 ) zum lösbaren Einhängen in die Lochungen korrespondieren bzw. dass die Haken horizontal durch die Lochungen bereichsweise durchsteckbar sind.

In weiterer Ausgestaltung der Erfindung ist ein ein Adapterteil mit Adapternase und Ausstanzungen vorgesehen, mittels dessen die Verwendung herkömmlicher bzw. bisher schon benutzter Kragarme mit zwei Haken für Schwerlasten ohne Beschädigung der Blechflansche bzw. deren Lochungen und Sicherstellung der statischen Auslegung möglich ist.

Schließlich ist es zweckmäßig, dass die Ständer mit den Ständerfüßen verschraubt sind, wobei die Ständerfüße in die Profilierung der Blechfansche zumindest teilweise eingreifen. Die Ständerfüße können dadurch einfacher gestaltet sein und brauchen nicht vor Ort angeschweißt zu werden, wodurch eine leichtere Endmontage und Transport sowie die Lagerhaltung ermöglicht werden. Dadurch kann der Ständer bereits fertig lackiert angeliefert und kundenspezifisch zusammengebaut werden. Auch im Ausland können die frachtintensiven Ständer (Flansch und Steg) lagerhaltig geführt werden; Kragarme und Ständerfüße werden dann kundenspezifisch zugeliefert.

Weitere Einzelheiten, Merkmale und Vorteile der Erfindung ergeben sich aus der nachstehenden Erläuterung von in den Zeichnungen schematisch dargestellten Ausführungsbeispielen.

Es zeigen:
- Fig. 1: eine perspektivische Teilansicht eines Kragarmregal-Ständers mit teilgeschnittenem, eingehängten Kragarm,
- Fig. 2: einen schematisierten Querschnitt als Teilabschnitt eines Ständers zu einer Seite der Spiegelachse x-x mit eingehängtem Kragarm,
- Fig. 3: den schematischen Gesamtquerschnitt nach Fig. 2,
- Fig. 4: eine perspektivische Teilansicht eines Kragarms,
- Fig. 5: in perspektivischer Seitenansicht ein Adapterteil,
- Fig. 6: ein Adapterteil gemäß Fig. 5 im Ständer, in perspektivischer Seitenansicht,
- Fig. 7: einen schematischen Teilquerschnitt einer Steg/Flansch-Verbindung,
- Fig. 8: einen schematischen Teilquerschnitt einer Steg/Flansch-Verbindung,
- Fig. 9: den Querschnitt eines Flansch/Steg-Profils in anderer Ausgestaltung,
- Fig. 10: einen Gesamtquerschnitt zweier Flansch/Steg-Profile nach Fig. 9,
- Fig. 11: eine Ständer/Fuß-Verbindung in perspektivischer Teilansicht,
- Fig. 12: wie Fig. 11, jedoch in anderem Blickwinkel,
- Fig. 13: einen schematischen Teilquerschnitt eines Flansch/Steg-Profils mit Doppelfaltung der Blechflansche, in Abwandlung von Fig 9.,
- Fig. 14: einen schematischen Teilquerschnitt eines Flansch/Steg-Profils mit Verstärkungsmaterial, in Ergänzung zu Fig 9.,
- Fig. 15: einen schematischen Querschnitt eines doppelt gefalteten Blechflansches mit einer Flansch/Steg-Verbindung,
- Fig. 16: ein schematisiertes Lochbild einer Halteöffnung mit Bolzen im Bereich der Vertikainut, zur Befestigung der Nase eines Kragarms am Ständer.

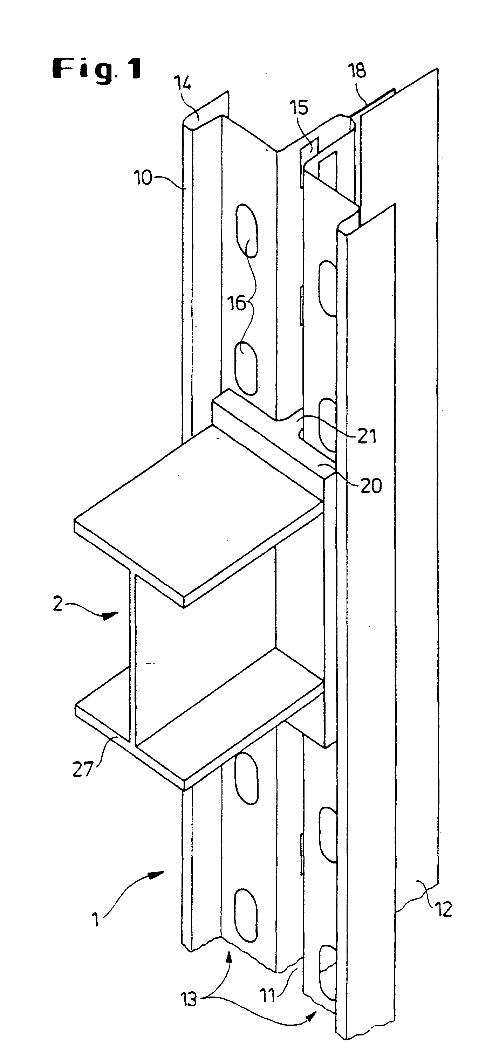

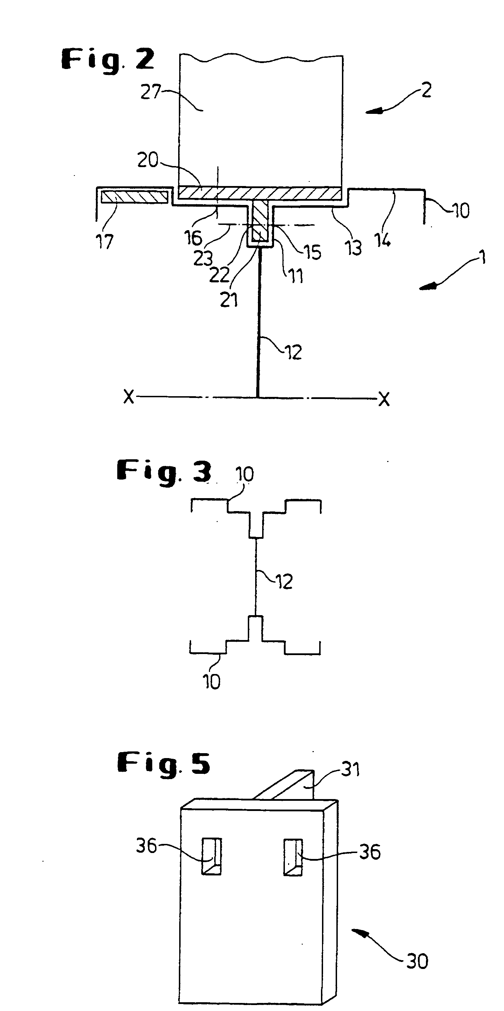

Das erfindungsgemäße Kragarmregal weist bekanntermaßen mehrere Ständer 1, zumindest zwei Ständer 1 je Regal auf. Die Anzahl der Ständer 1 ist jedoch beliebig. Die Ständer 1 können in gleichen oder ungleichen Abständen angeordnet sein. Bei dem in den Figuren 1 und 2 dargestellten Ausführungsbeispiel ist nur ein Teilausschnitt der Ständer/Kragarm-Verbindung gezeigt, wobei am Ständer 1 ein Kragarm 2 angeordnet ist. Der Ständer 1 besteht aus profilierten Blechflanschen 10, die über einen Steg 12 in etwa ein Doppel-T-Profil bilden (nicht dargestellt, siehe Fig. 3).

In den Flanschen 10 der Ständer 1 sind Lochungen 16 paarweise im Abstand voneinander und vorzugsweise in gleicher Höhe übereinander angeordnet. Die Blechflansche 10 besitzen eine Vertikalnut 11, an der der Steg 12 außen befestigt ist. An die Vertikalnut 11 schließen sich zu beiden Seiten nach außen gegenüber der Außenfront vertiefte Wangen 13 an. An den Außenseiten der profilierten Blechflansche 10 sind jeweils Ausbuchtungen 14 zur Aufnahme von Verstärkungsmaterial (17, Fig. 2) vorgesehen, wobei das Verstärkungsmaterial vom Ständerfuß vorzugsweise bis zu einer Höhe von etwa 1,5 m eingeschweißt sein kann, jedenfalls nicht über die gesamte Höhe. Eine Stegleiste 18 dient der Verbindung zwischen den Flanschen 10 bzw. der dazwischen befindlichen Vertikalnut 11 und dem Steg 12.

Die Kragarme 2 bestehen aus einem, dem jeweiligen Anwendungsfall entsprechend lang ausgestalteten, Doppel-T-Profil 27 oder einer anderen Profilierung und weisen eine Fußplatte 20 mit einer Nase 21 auf, wobei die Nase 21 in die Vertikalnut 11 einbringbar und darin befestigbar ausgebildet ist.

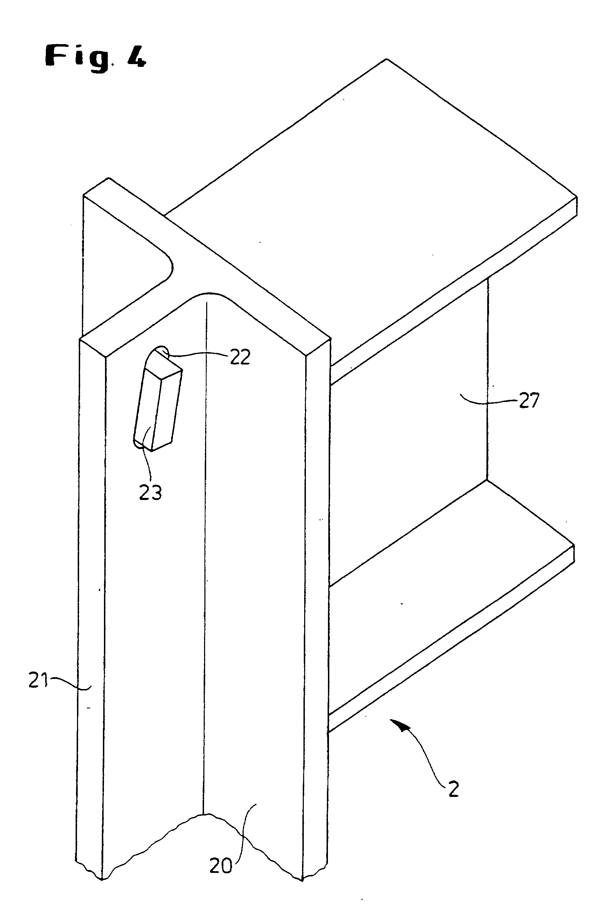

Die Vertikalnut 11 hat seitlich Halteöffnungen 15 und die Nase 21 eine Bohrung (22, Fig. 4) mit kompatibler Durchtrittsform, durch die ein Haltebolzen (23, Fig. 4) vorzugsweise selbstsichemd einbringbar ist.

Die Halteöffnungen 15 und Bohrungen 22 (vgl. Fig. 4) können dabei anders als dargestellt beliebige Profilierungen aufweisen, wobei es insbesondere von Vorteil ist, wenn der Kragarm 2 nach oben beweglich ist. Vorzugsweise ist an eine Profilierung gedacht, wie sie in der Internationalen Anmeldung WO 98/11804 beschrieben ist, wobei der Bolzen 23 dann mit einer selbstsichemden Nase versehen ist. Der Bolzen 23 kann darüber hinaus als Tragstab aus Flachmaterial bestehen, korrespondierend zu den Halteöffnungen 15 bzw. Bohrungen 22.

Figur 3 veranschaulicht den schematischen Gesamtquerschnitt der profilierten Blechflansche 10 mit Steg 12.

Figur 4 verdeutlicht in perspektivischer Teilansicht den prinzipiellen Aufbau eines Kragarms 2 nach der Erfindung, bestehend hier aus einem Doppel-T-Profil 27 - wobei allerdings auch andere beliebige Profile Verwendung finden können - und der Fußplatte 20 mit Nase 21, in der die winklig angeordnete Bohrung 22 zur Aufnahme des Haltebolzens 23 vorgesehen ist. Erkennbar sind Fußplatte 20 und/oder Nase 21 aus einfachsten Materialien bzw. aus Profilstahl, ggf. auch aus Gussoder Schmiedestücken kostengünstig herstellbar ausgebildet.

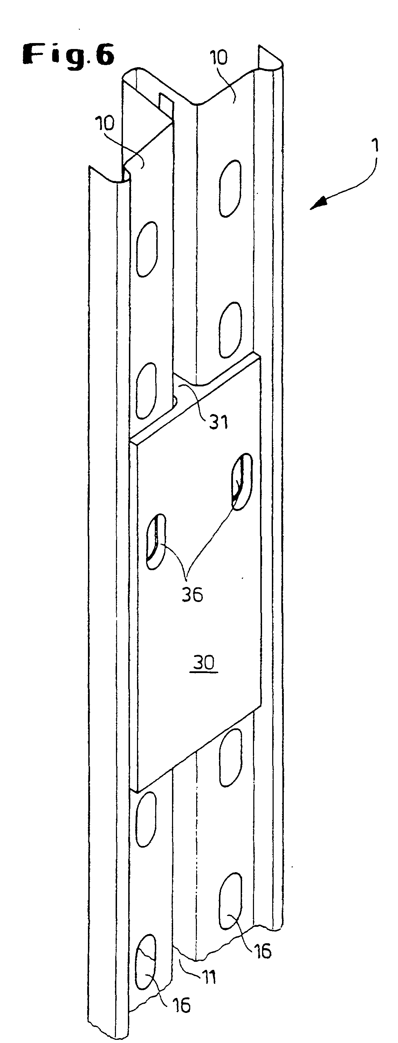

Figur 5 zeigt ein Adapterteil 30 mit Adapternase 31 und Ausstanzungen 36, mittels dessen die Verwendung herkömmlicher bzw. bereits im Einsatz befindlicher Kragarme für Schwerlasten ohne Beschädigung der Blechflansche 10 bzw. der Lochungen 16 möglich ist, wobei aus Figur 6 die Anbringung des Adapterteils 30 und der Eingriff der Adaptemase 31 in der Vertikalnut 11 am Ständer 1 ersichtlich ist. Die Ausstanzungen 36 befinden sich dabei auf gleicher Höhe wie die Lochungen 16.

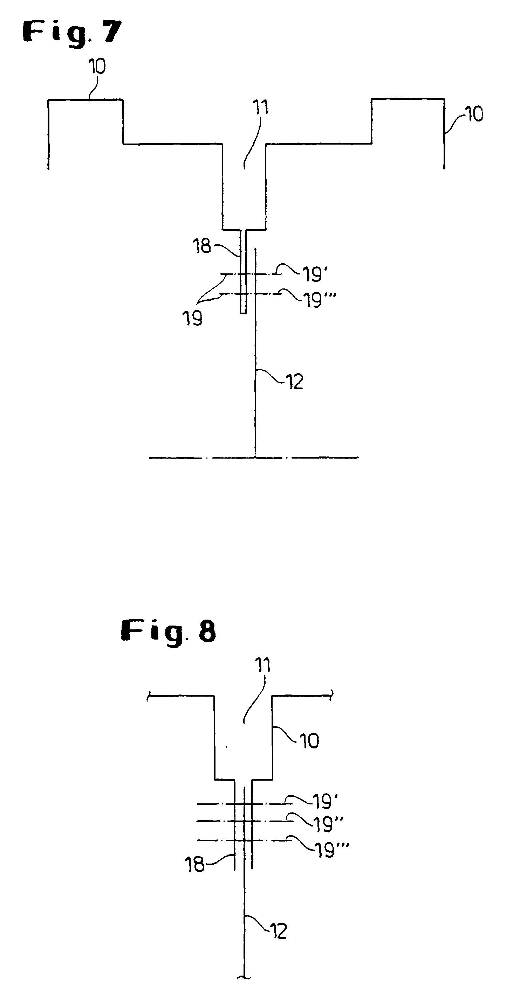

Die Figuren 7 und 8 zeigen alternative Ausgestaltungen der Steg/Flansch-Verbindung, wobei die Breite der Stege 12 und/oder deren Befestigung an den Blechflanschen 10 verstellbar ausgebildet ist, vorzugsweise durch eine Stegleiste 18 in Verbindung mit ein oder mehreren Stegverbindern 19, 1.9', 19", 19"', wodurch die Stegweite beliebig variierbar ist und damit die Tragfähigkeit des Regals ideal den jeweiligen Anforderungen angepasst werden kann.

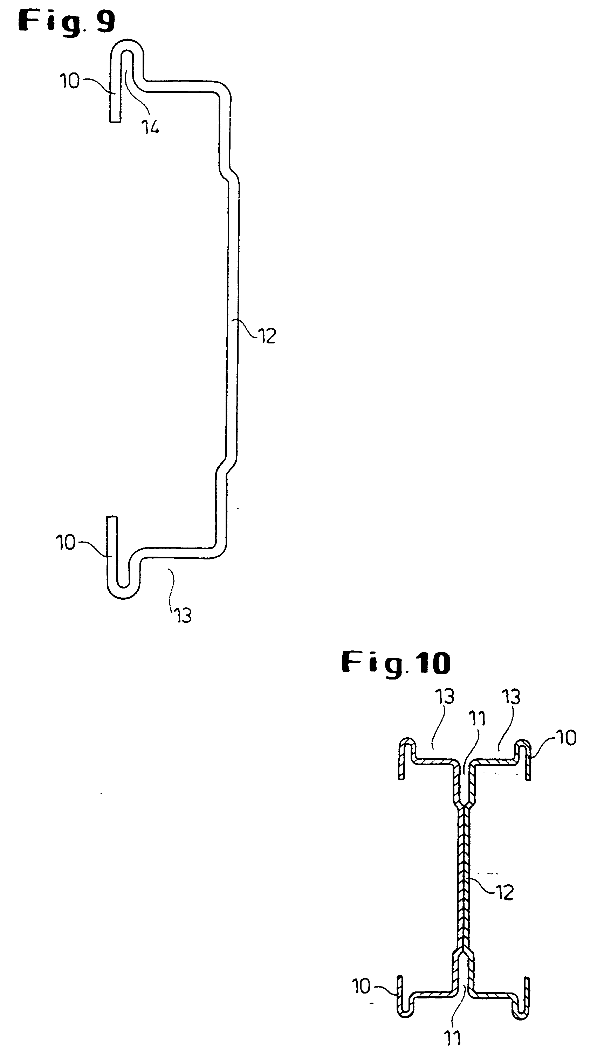

In Figur 9 ist eine andere Ausführung eines Flansch/Steg- Profils 10, 12 dargestellt, wobei ersichtlich ist, dass hierbei die Flansche 10 und der Steg 12 einteilig als Teilprofil ausgebildet sind und für unterschiedliche Stegweiten und Flanschprofilierungen, die jeweils gewünschten Teilprofile bereitzustellen sind. Das Teilprofil zeigt außerdem die vertieften Wangen 13 sowie die Ausbuchtungen 14 und besteht beispielsweise aus St 52 mit einer Dicke von 5 mm.

Figur 10 zeigt den Gesamtquerschnitt zweier spiegelbildlich zusammengefügter Teilprofile, wobei diese im Bereich des Steges 12 aneinander in beliebiger Weise befestigt sind, beispielsweise durch Schrauben, Nieten, Schweißnähte etc.. Selbstverständlich weisen die Wangen 13 die bereits vorbeschriebenen Lochungen (16, nicht dargestellt) zur Anbringung von Kragarmen (2, Fig. 1) auf.

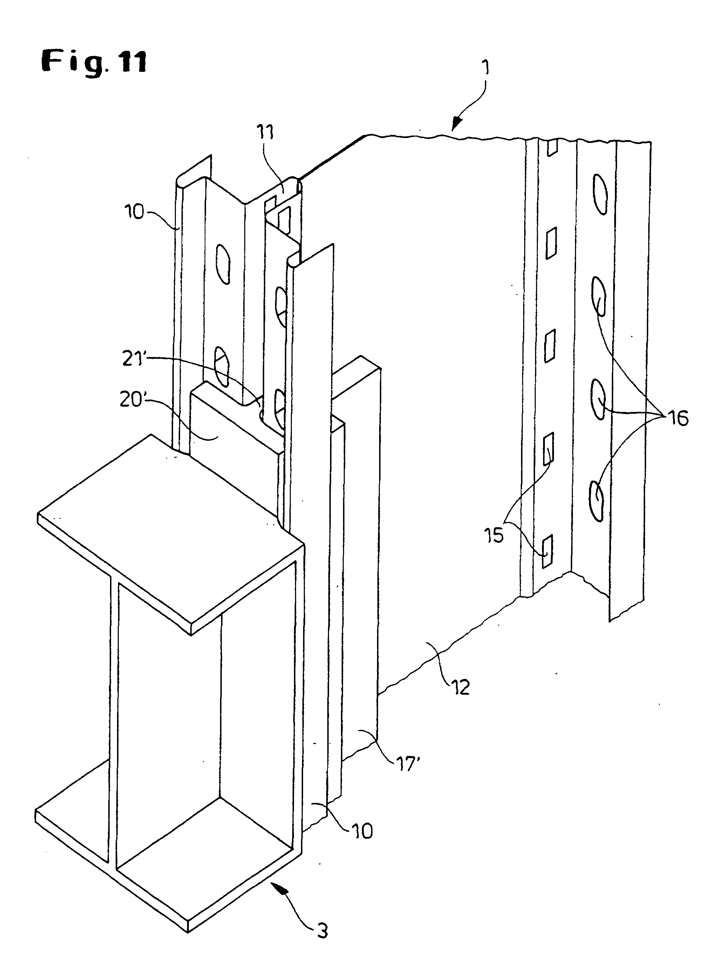

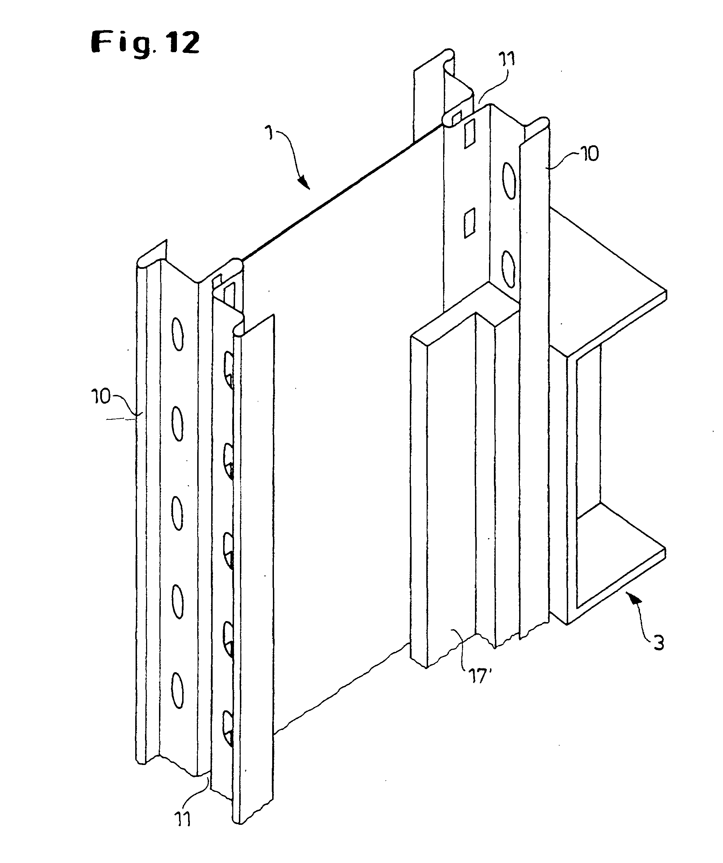

Aus den Figuren 11 und 12 ist die Ausbildung eines Ständerfußes 3 (Profil stark verkürzt dargestellt) am Ständer 1 erkennbar. Der Ständerfuß 3 ist dabei, ähnlich wie bei der Kragarmaufhängung gemäß Fig. 1, mit einer Fußplatte 20' und einer Nase 21' versehen, wobei die Nase 21' in die Vertikalnut 11 eingreift und in beliebiger Art und Weise mit den profilierten Blechflanschen 10 verbunden ist. An der Rückseite der Blechflansche 10 kann zur Stabilitätsverbesserung Verstärkungsmaterial 17' vorgesehen und angeordnet sein.

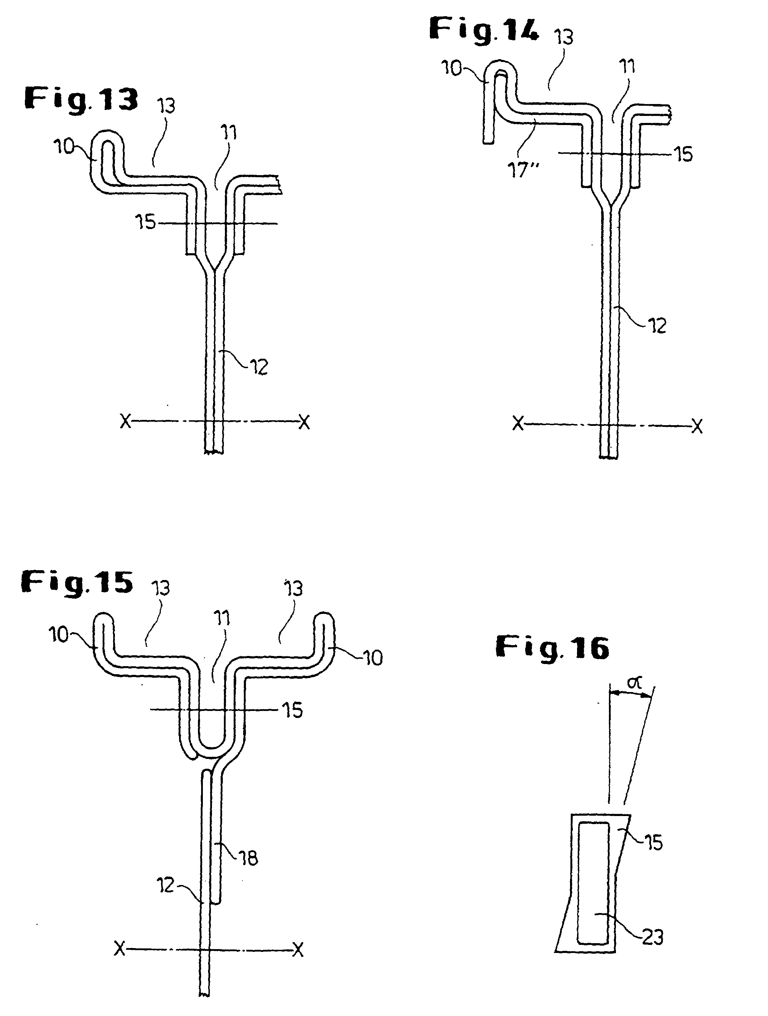

Figur 13 zeigt den schematischen Teilquerschnitt eines Flansch/Steg-Profils 10, 12 um die Spiegelebene x-x, bei dem das Blech im Flanschbereich bzw. im Bereich der vertieften Wangen 13 und der Vertikalnut 11 doppelt gefaltet ist, wodurch insbesondere die Halteöffnungen 15 in der Vertikalnut 11 verstärkt werden. Wegen der sehr hohen örtlichen Kräfte, die durch den Kragarm eingebracht werden, ist die Materialstärke an dieser Stelle besonders wichtig. Die Verstärkung kann beispielsweise auch dadurch erfolgen, dass mehrere Materialschichten das Flansch- oder Flansch/Steg-Profil 10, 12 bilden, indem separate Profile zusammenfügbar aneinander angepasst sind.

Aus Figur 14 ist eine andere Lösung des vorstehend aufgezeigten Problems ersichtlich, wobei hier Verstärkungsmaterial als eigenständiges Bauteil bzw. Verstärkerteil 17" in die Flansche 10 eingebracht wird. Das Verstärkerteil 17" weist ein deckungsgleiches Lochbild zu den Halteöffnungen 15 auf. Die Bauhöhe des Verstärkerteils 17" erstreckt sich je nach Lastsituation über zumindest ein bis drei Halteöffnungen 15; die genaue Anzahl bzw. Länge des Verstärkerteils 17" ist jedoch nicht beschränkt. Ebenso kann das Verstärkerteil 17" bei einem doppelt oder mehrfach gefalteten Flansch/Steg-Profil 10, 12 zur zusätzlichen Verstärkung eingesetzt werden.

Figur 15 zeigt eine weitere Variante, den Querschnitt eines Flansch/Steg-Profils 10, 12 um die Spiegelebene x-x zu verstärken, wobei die profilierten Blechflansche 10 einteilig und im Bereich der vertieften Wangen 13 und der Vertikalnut 11 doppelt gefaltet sind, wodurch wiederum die Halteöffnungen 15 in der Vertikalnut 11 verstärkt werden. Wie auch in Fig. 7 dargestellt, weisen die Blechflansche 10 zumindest an einem Ende eine Stegleiste 18 auf, die in geeigneter Weise mit dem Steg 12 verbindbar ist. Nicht dargestellt aber alternativ einsetzbar ist eine Kombination, in der das Verstärkerteil 17" (Fig. 14) zusätzlich mit den doppelt oder mehrfach gefalteten Flansch/Steg-Profilen (Fig. 13, Fig. 15) verwendet wird und damit zu einer nochmaligen Verstärkung führt.

Gemäß Figur 16 kann die Bohrung (22, Fig. 4) in der Nase (21, Fig. 4) korrespondierend zum Bolzen 23 auch als Langloch ausgestaltet sein, während die Halteöffnungen 15 in der Vertikalnut (11, Fig. 1 etc.) demgegenüber eine x-förmige Aufweitung bzw. Lochform besitzen und die es gestatten, den Kragarm von außen um einen bestimmten Winkel α von etwa 15 bis 20° anzuheben bzw. kippbeweglich zu halten. Die Halteöffnungen 15 können dabei abweichend von der gezeigten Darstellung selbst winklig in der Vertikalnut angeordnet sein, angepasst an eine angewinkelte Stellung der Bohrung (vgl. 22, Fig. 4) zur Aufnahme des Bolzens 23.

Die erfindungsgemäßen Maßnahmen und Ausgestaltungen sind nicht auf die in den Zeichnungsfiguren dargestellten Ausführungsbeispiele beschränkt. Mögliche Abwandlungen der erfindungsgemäßen Vorrichtung können darin bestehen, dass beispielsweise die Ständerprofile unterschiedlichste Querschnittsformen aufweisen und auch die Stege aus unterschiedlichen Materialien bestehen. Die jeweilige konstruktive Ausgestaltung ist in Anpassung an besondere Verwendungen dem Fachmann freigestellt.

## Patentansprüche

1. Kragarmregal für Langgutprodukte wie Bretter, Rohre, Profileisen und dgl., mit Ständern (1) aus profilierten Blechflanschen (10), die miteinander verbunden und querschnittsmäßig in etwa ein Doppel-T-Profil ausbilden, mit von den Ständern (1) aus sich erstreckenden Kragarmen (2), **dadurch gekennzeichnet, dass** die profilierten Blechflansche (10) über einen Steg (12) verbunden sind und Vertikalnuten (11) besitzen, an die sich der Steg (12) anschließt, und dass sich an die Vertikalnuten (11) zu beiden Seiten nach außen gegenüber der Außenfront vertiefte Wangen (13) anschließen.

2. Kragarmregal nach Anspruch 1, **dadurch gekennzeichnet, dass** die Vertikalnuten (11) seitliche Halteöffnungen (15) aufweisen.

3. Kragarmregal nach Anspruch 1 oder 2, **dadurch gekennzeichnet, dass** die Blechflansche (10) zumindest im Bereich der vertieften Wangen (13) und der Vertikalnuten (11) verstärkt, vorzugsweise doppelt gefaltet sind.

4. Kragarmregal nach einem oder mehreren der Ansprüche 1 bis 3, **dadurch gekennzeichnet, dass** an den Außenseiten der profilierten Blechflansche (10) jeweils Ausbuchtungen (14), vorzugsweise zur Aufnahme von Verstärkungsmaterial (17, 17', 17") vorgesehen sind.

5. Kragarmregal nach Anspruch 4, **dadurch gekennzeichnet, dass** das Verstärkungsmaterial (17, 17') vom Ständerfuß (3) vorzugsweise bis zu einer Höhe von maximal etwa 1,5 m eingeschweißt ist.

6. Kragarmregal nach Anspruch 4 oder 5, **dadurch gekennzeichnet, dass** das Verstärkungsmaterial als eigenständiges Bauteil bzw. Verstärkerteil (17") in die Flansche (10) einbringbar ist und ein deckungsgleiches Lochbild zu den Halteöffnungen (15) aufweist, wobei sich die Bauhöhe des Verstärkerteils (17") je nach Lastsituation über zumindest ein bis drei Halteöffnungen (15) erstreckt.

7. Kragarmregal nach einem oder mehreren der Ansprüche 1 bis 6, **dadurch gekennzeichnet, dass** die profilierten Blechflansche (10) einteilig und zumindest im Bereich der vertieften Wangen (13) und der Vertikalnut (11) doppelt gefaltet sind.

8. Kragarmregal nach einem oder mehreren der Ansprüche 1 bis 7, **dadurch gekennzeichnet, dass** die Blechflansche (10) und der Steg (12) einteilig als Teilprofil ausgebildet sind, wobei jeweils zwei Teilprofile spiegelbildlich zusammengefügt und aneinander befestigt sind.

9. Kragarmregal nach einem oder mehreren der Ansprüche 1 bis 8, **dadurch gekennzeichnet, dass** die Kragarme (2) und/oder die Ständerfüße (3) eine Fußplatte (20, 20') mit einer Nase (21, 21') aufweisen, wobei die Nase (21, 21') in die Vertikalnut (11) einbringbar und darin befestigbar ausgebildet ist.

10. Kragarmregal nach Anspruch 9, **dadurch gekennzeichnet, dass** die Nase (21, 21') eine Bohrung (22) mit kompatibler Durchtrittsform zu den Halteöffnungen (15) aufweist, durch die ein Haltebolzen (23) vorzugsweise selbstsichernd einbringbar ist, wobei die Bohrung (22) vorzugsweise korrespondierend zum Bolzen (23) als winkeliges Langloch ausgestaltet ist, während die Halteöffnungen (15) demgegenüber eine x-förmige Aufweitung bzw. Lochform besitzen, die es gestatten, den Kragarm (2) von außen um einen bestimmten Winkel (α) von etwa 15 bis 20° anzuheben bzw. kippbeweglich zu halten.

11. Kragarmregal nach einem oder mehreren der Ansprüche 1 bis 10, **dadurch gekennzeichnet, dass** in den vertieften Wangen (13) Lochungen (16) paarweise im Abstand voneinander und vorzugsweise in gleicher Höhe übereinander angeordnet sind.

12. Kragarmregal nach Anspruch 11, **dadurch gekennzeichnet, dass** ein Adapterteil (30) mit Adaptemase (31) und zwei Ausstanzungen (36) vorgesehen ist, die mit den Lochungen (16) in den Blechflanschen (10) korrespondieren.

13. Kragarmregal nach einem oder mehreren der Ansprüche 1 bis 12, **dadurch gekennzeichnet, dass** die Ständer (1) mit den Ständerfüßen (3) verschraubt sind, wobei die Ständerfüße (3) in die Profilierung der Blechfansche (10) zumindest teilweise eingreifen.

14. Kragarmregal nach einem oder mehreren der Ansprüche 1 bis 13, **dadurch gekennzeichnet, dass** die Breite der Stege (12) und/oder deren Befestigung an den Blechflanschen (10) verstellbar ausgebildet ist, vorzugsweise durch eine Stegleiste (18) in Verbindung mit ein oder mehreren Stegverbindern (19, 19', 19", 19"').

## Claims

1. Cantilever-type shelf for long products such as boards, pipes, sectional irons and similar, with uprights (1) of profiled sheet-metal flanges (10) which, connected together and in terms of cross section, approximately form an I-section, with cantilevers (2) extending from the uprights (1), **characterised in that** the profiled sheet-metal flanges (10) are connected by means of a web (12) and have vertical grooves (11) which are adjoined by the web (12), and that side pieces (13), which are recessed outwards with respect to the outer front, adjoin the vertical grooves (11) on both sides.

2. Cantilever-type shelf according to Claim 1, **characterised in that** the vertical grooves (11) comprise lateral retaining openings (15).

3. Cantilever-type shelf according to Claim 1 or 2, **characterised in that** the sheet-metal flanges (10) are reinforced, preferably double-folded, at least in the region of the recessed side pieces (13) and the vertical grooves (11).

4. Cantilever-type shelf according to one or more of Claims 1 to 3, **characterised in that** bulges (14), preferably for accommodating reinforcement material (17, 17', 17"), are provided at the outer sides of the profiled sheet-metal flanges (10).

5. Cantilever-type shelf according to Claim 4, **characterised in that** the reinforcement material (17, 17') is welded in from the upright base (3) preferably to a maximum height of approximately 1.5 m.

6. Cantilever-type shelf according to Claim 4 or 5, **characterised in that** the reinforcement material can be introduced as an independent component or reinforcement part (17") into the flanges (10) and comprises a hole pattern which is congruent with the retaining openings (15), wherein the overall height of the reinforcement part (17") extends over at least one to three retaining openings (15), depending on the load situation.

7. Cantilever-type shelf according to one or more of Claims 1 to 6, **characterised in that** the profiled sheet-metal flanges (10) are double-folded in one piece and at least in the region of the recessed side pieces (13) and the vertical groove (11).

8. Cantilever-type shelf according to one or more of Claims 1 to 7, **characterised in that** the sheet-metal flanges (10) and the web (12) are formed in one piece as a partial section, wherein each two partial sections are assembled and fastened to one another in mirror-inverted fashion.

9. Cantilever-type shelf according to one or more of Claims 1 to 8, **characterised in that** the cantilevers (2) and or the upright bases (3) comprise a base plate (20, 20') with a projection (21, 21'), wherein the projection (21, 21') is formed such that it can be introduced into the vertical groove (11) and fastened therein.

10. Cantilever-type shelf according to Claim 9, **characterised in that** the projection (21, 21') comprises a bore (22) of a cross-sectional shape which is compatible with the retaining openings (15), through which a retaining bolt (23) can be introduced preferably in self-locking fashion, wherein the bore (22) is formed as an angled elongate hole preferably so as to correspond to the bolt (23), whereas, in contrast, the retaining openings (15) have an x-shaped widening or hole shape which allows the cantilever (2) to be raised from outside through a specific angle (α) of approximately 15 to 20° or held in a tiltable state.

11. Cantilever-type shelf according to one or more of Claims 1 to 10, **characterised in that** perforations (16) are disposed in pairs one above the other at a spacing from one another and preferably at the same level in the recessed side pieces (13).

12. Cantilever-type shelf according to Claim 11, **characterised in that** an adapter part (30) with an adapter projection (31) and two punched holes (36) is provided, these holes corresponding to the perforations (16) in the sheet-metal flanges (10).

13. Cantilever-type shelf according to one or more of Claims 1 to 12, **characterised in that** the uprights (1) are screwed to the upright bases (3), wherein the upright bases (3) engage at least partly in the profiling of the sheet-metal flanges (10).

14. Cantilever-type shelf according to one or more of Claims 1 to 13, **characterised in that** the width of the webs (12) and/or their fastening to the sheet-metal flanges (10) are/is adjustable, preferably by means of a web strip (18) in conjunction with one or more web connectors (19, 19', 19", 19"').

## Revendications

1. Rayonnage à bras en porte-à-faux pour des produits longs tels que des planches, des tubes, des fers profilés et similaires comportant des supports (1) constitués d'ailes en tôle profilées (10) qui sont reliées entre elles en formant sensiblement en section transversale un profilé en double T, les bras en porte-à-faux (2) partant des supports (1),
**caractérisé en ce que**
les ailes en tôle profilées (10) sont reliées par une âme (12) et possèdent des rainures verticales (11) auxquelles cette âme se raccorde ainsi que des joues (13) qui se raccordent à ces rainures (11) en étant dirigées des deux côtés vers l'extérieur, et disposées en retrait par rapport à la surface frontale.

2. Rayonnage à bras en porte-à-faux selon la revendication 1,
**caractérisé en ce que**
les rainures verticales (11) présentent des ouvertures latérales de maintien (15).

3. Rayonnage à bras en porte-à-faux selon la revendication 1 ou 2,
**caractérisé en ce que**
les ailes en tôle (10), au moins dans la zone des joues en retrait (13) et des rainures verticales (11), sont renforcées en étant de préférence pliés deux fois.

4. Rayonnage à bras en porte-à-faux selon une ou plusieurs des revendications 1 à 3,
**caractérisé en ce que**
sur les côtés externes des ailes en tôle profilées (10) sont prévues des parties embouties (14), de préférence pour accueillir un matériau de renforcement (17, 17', 17").

5. Rayonnage à bras en porte-à-faux selon la revendication 4,
**caractérisé en ce que**
le matériau de renforcement (17, 17'), partant du pied du support (3) est soudé de préférence jusqu'à une hauteur maximale d'environ 1,5 m.

6. Rayonnage à bras en porte-à-faux selon la revendication 4 ou 5,
**caractérisé en ce que**
le matériau de renforcement peut être introduit en tant que composant individuel, c'est-à-dire partie de renforcement (17") dans l'aile (10) et présente des trous qui viennent se recouvrir avec les ouvertures de maintien (15), la hauteur de la partie de renforcement (17") s'étendant selon la situation de charge sur au moins une à trois ouvertures de maintien (15).

7. Rayonnage à bras en porte-à-faux selon une ou plusieurs des revendications 1 à 6,
**caractérisé en ce que**
les ailes en tôle profilées (10) sont monoblocs et présentent un double pliage, au moins dans la zone des joues en retrait (13) et de la rainure verticale (11).

8. Rayonnage à bras en porte-à-faux selon une ou plusieurs des revendications 1 à 7,
**caractérisé en ce que**
les ailes en tôle (10) et l'âme (12) sont réalisées monoblocs en tant que profilés élémentaires, et chaque fois deux profilés élémentaires sont réunis de manière à être symétriques et sont fixés l'un à l'autre.

9. Rayonnage à bras en porte-à-faux selon une ou plusieurs des revendications 1 à 8,
**caractérisé en ce que**
les bras en porte-à-faux (2) et/ou les pieds de support (3) présentent une plaque de pied (20, 20') avec un nez (21, 21') qui peut être introduit et fixé dans la rainure verticale (11).

10. Rayonnage à bras en porte-à-faux selon la revendication 9,
**caractérisé en ce que**
le nez (21, 21') présente un trou (22) avec un passage dont la forme est compatible avec les ouvertures de maintien (15) et à travers lequel un tenon de maintien (23), de préférence auto-sécurisé, peut être introduit, le trou (22) ayant la forme d'un trou allongé à angles correspondant au tenon (23), tandis que les ouvertures de maintien (15) possèdent par contre un élargissement, c'est-à-dire une forme de trou en x, permettant de relever de l'extérieur le bras en porte-à-faux (2) d'un certain angle α de 15 à 20° environ et de le maintenir avec possibilité de basculement.

11. Rayonnage à bras en porte-à-faux selon une ou plusieurs des revendications 1 à 10,
**caractérisé en ce que**
dans les joues en retrait (13) sont percés, par paires, des trous (16) espacés l'un de l'autre et situés à la même hauteur, les paires étant superposées les unes aux autres.

12. Rayonnage à bras en porte-à-faux selon la revendication 11,
**caractérisé en ce que**
il est prévu une pièce d'adaptation (30) avec un nez d'adaptation (31) et deux découpes (36) correspondant aux trous (16) dans les joues (13).

13. Rayonnage à bras en porte-à-faux selon une des revendications 1 à 12,
**caractérisé en ce que**
les supports (1) sont reliés par des vis aux pieds de support (3) qui sont engagés, au moins partiellement, dans le profilé constituant les ailes en tôle (10).

14. Rayonnage à bras en porte-à-faux selon une des revendications 1 à 13,
**caractérisé en ce que**
la largeur des âmes (12) et/ou leur fixation sur les ailes en tôle (10) est réglable, de préférence par l'intermédiaire d'une barrette d'âme(18) en liaison avec une ou plusieurs attaches de barrette (19, 19', 19", 19"').
